# EUROPÄISCHE PATENTSCHRIFT

(11) **EP 1 032 771 B1**
(45) Veröffentlichungstag und Bekanntmachung des Hinweises auf die Patenterteilung: **31.03.2004**
(21) Anmeldenummer: 98959852.9
(22) Anmeldetag: 05.11.1998
(51) Int. Cl.: F16D 65/12

(54) **BREMSEINRICHTUNG FÜR KRAFTFAHRZEUGE**
MOTOR VEHICLE BRAKING DEVICE
SYSTEME DE FREINAGE POUR AUTOMOBILES

(30) Priorität: 22.11.1997 DE 19751915
(43) Veröffentlichungstag der Anmeldung: 06.09.2000
(73) Patentinhaber: Continental Teves AG & Co. oHG, 60488 Frankfurt (DE)
(72) Erfinder: REUBER, Gerhard, D-57489 Drolshagen (DE); WEILER, Rolf, D-65817 Eppstein (DE); PANEK, Claus-Peter, D-61449 Steinbach (DE)
(86) Internationale Anmeldenummer: PCT/EP1998/007075
(87) Internationale Veröffentlichungsnummer: WO 1999/027269

(56) Entgegenhaltungen:
- DE-A- 2 432 728
- DE-A- 3 824 917
- DE-A- 4 344 051
- PATENT ABSTRACTS OF JAPAN vol. 098, no. 014, 31. Dezember 1998 & JP 10 246256 A (NISSIN KOGYO KK), 14. September 1998
- PATENT ABSTRACTS OF JAPAN vol. 097, no. 002, 28. Februar 1997 & JP 08 270688 A (SUZUKI MOTOR CORP), 15. Oktober 1996

## Beschreibung

Die Erfindung betrifft eine Bremseinrichtung für die Räder eines Kraftfahrzeuges mit einer radseitigen Bremstrommel und einem fahrzeugseitigen Schmutzblech, das zur Ausbildung einer labyrinthartigen Dichtung mit einem umlaufenden Steg in eine ringförmige Ausnehmung in der dem Schmutzblech gegenüberliegenden Stirnfläche der Bremstrommel berührungslos eingreift.

Bei derartigen Bremseinrichtungen sind die Bremsbacken und die zu ihrer Betätigung erforderlichen Teile in dem Raum angeordnet, der von der sich mit dem Rad drehenden Bremstrommel einerseits sowie dem fahrzeugseitigen, also relativ zum Rad feststehenden Schmutzblech, umgrenzt ist. Zum Schutze dieser Teile ist man bestrebt, zwischen der radseitigen Bremstrommel und dem fahrzeugseitigen Schmutzblech eine möglichst gute Abdichtung zu realisieren, um die Teile vor Schmutz und Spritzwasser zu schützen.

Aus der DE 38 24 917 A1 sind verschiedene Ausführungsformen einer labyrinthartigen Abdichtung bekanntgeworden, die alle darauf beruhen, daß an das Schmutzblech ein ringförmiger Steg angeschweißt ist. Diese Herstellungsweise ist nicht nur verhältnismäßig kostenaufwendig, weil das Schmutzblech mit dem ringförmigen Steg in einem besonderen Arbeitsschritt zusammengefügt werden muß, sie birgt auch erhebliche fertigungstechnische Nachteile, weil das häufig recht kompliziert geformte Schmutzblech und auch der ringförmige Steg aus den Umformvorgängen herrührende innere Spannungen aufweisen, die bei der während des Schweißens zwangsläufig erfolgenden Erwärmung in einen nicht kontrollierbaren Umfang abgebaut werden und zu Verformungen der Bauteile führen. Die bekannten Schmutzbleche mit angeschweißtem ringförmigen Steg erfordern daher regelmäßig eine Nachbearbeitung, damit die vorgegebenen engen Fertigungstoleranzen eingehalten werden können und nicht erhebliche Stückzahlen als unbrauchbar verworfen werden müssen. Die bekannten Schmutzbleche sind also zum einen wegen des erforderlichen Schweißvorganges, zum anderen aber wegen der daraus resultierenden Prüf- und Nachbearbeitungsschritte fertigungstechnisch sehr aufwendig.

Der Erfindung geht daher aus von einer Bremseinrichtung der sich aus dem Oberbegriffe des Anspruch 1 beziehungsweise Anspruch 2 ergebenden Gattung.

Der Erfindung liegt die Aufgabe zugrunde, eine Bremseinrichtung der eingangs genannten Art vorzuschlagen, die demgegenüber wesentlich kostengünstiger hergestellt werden kann und bei der insbesondere bei der Schmutzblechfertigung kostentreibende Prüfund Nacharbeitungsvorgänge entfallen können.

Diese Aufgabe wird im Prinzip dadurch gelöst, daß das Schmutzblech durch Stanz- und Tiefziehvorgänge aus einem Blechabschnitt hergestellt ist und daß der umlaufende Steg durch spanloses Umformen einstückig mit dem Schmutzblech ausgebildet ist. Dem liegt die Erwägung zugrunde, daß, wenn es gelingt, den ringförmigen Steg fertigungstechnisch direkt aus dem Blechabschnitt für das Schmutzblech herzustellen, der Schweißvorgang mit allen genannten Nachteilen wegfallen kann. Überraschenderweise hat sich herausgestellt, daß dieses Ziel bei Ausnutzung der heute verfügbaren spanlosen Umformtechniken erreicht werden kann und daß somit ein Schmutzblech zur Verfügung gestellt werden kann, bei dem der ringförmige Steg einstückig mit den anderen Teilen des Schmutzbleches ausgebildet ist, so daß am Ende der Umformvorgänge ein einbaufertiges Schmutzblech vorliegt, das keine Nachbearbeitung mehr erfordert. Dabei kann die Ausbildung des ringförmigen Steges durchaus mit der im Hinblick auf andere Funktionen des Schmutzbleches erforderliche Ausformung in Einklang gebracht werden, so daß ein Schmutzblech mit ringförmigem Steg zur Verfügung gestellt werden kann, bei dem im Vergleich zu herkömmlichen Ausführungsformen keinerlei Nachteile in Kauf genommen werden müssen. Im einzelnen schlägt die vorliegende Erfindung zwei Lösungen vor. Bei der ersten Lösung gemäß dem Anspruch 1 finden die in dem kennzeichnenden Teil nach Anspruch 1 aufgeführten Merkmale Verwendung. Bei einer derartigen Lösung erreicht man einen erheblichen Gewinn an Einbauraum hinsichtlich der Trommel, da der durch die Stege abgegrenzte, in das Innere der Trommel ragende Raum sehr klein wird. Bei der zweiten Lösung gemäß dem kennzeichnenden Teil von Anspruch 2 wird das zu Verformungen der Blech weniger belastet und das Schmutzblech erhält eine größere Stabilität.

Vorteilhafte und zweckmäßige Ausführungsformen des Erfindungsgedankens sind in den Unteransprüchen 2 bis 6 beschrieben.

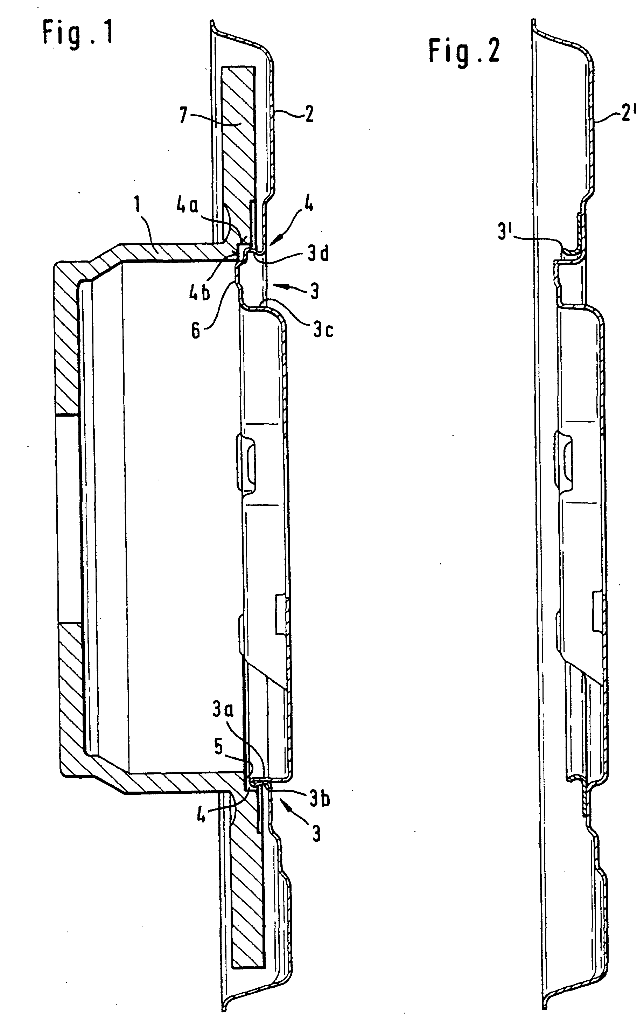

Weitere Einzelheiten des Erfindungsgedankens werden anhand des in Fig. 1 dargestellten Ausführungsbeispiels im Vergleich zu einem Schmutzblech nach dem Stand der Technik gemäß Fig. 2 näher erläutert.

In Fig. 2 ist ein herkömmliches Schmutzblech für eine einschlägige Bremseinrichtung im Schnitt dargestellt, wobei im Rahmen der hier näher zu erläuternden Erfindung nur von Bedeutung ist, daß ein gesondert hergestellter ringförmiger Steg 3' durch Schweißen, Löten oder dergleichen mit dem eigentlichen Schmutzblechkörper 2' verbunden ist.

Bei der erfindungsgemäßen Ausführungsform des Schmutzbleches ist der ringförmige Steg 3 einstückig aus dem Material des Schmutzbleches 2 geformt, wobei in der unteren Hälfte der Darstellung der radial innenliegende Halbsteg 3 a unmittelbar neben dem radial außenliegenden Halbsteg 3 b angeordnet ist. Dieser Stegquerschnitt erstreckt sich über einen Teilumfang des Schmutzbleches 2. Er greift in eine Ausnehmung 4 ein, die in der Stirnfläche 5 der Bremstrommel 1 ausgebildet ist. Dabei kann die Ausnehmung 4 sowohl am Rand der Bremstrommelstirnfläche 5 angeordnet sein wie auch beispielsweise als nicht dargestellte umlaufende Ringnut innerhalb der Bremstrommelstirnfläche 5.

Im oberen Teil der Darstellung sind die beiden Halbstege 3 c und 3 d des ringförmigen Steges 3 radial weiter auseinandergerückt und durch einen parallel zur Hauptebene des Schmutzbleches verlaufenden Blechabschnitt 6 miteinander verbunden. Der radial außenliegende Halbsteg 3 d greift in die Ausnehmung 4 der Bremstrommel 1 ein, die von einer zylindrischen Teilfläche 4 a sowie von einer zur Hauptebene des Schmutzbleches 2 parallel verlaufenden Teilfläche 4 b begrenzt ist. Dabei ist der Halbsteg 3d geneigt zur Hauptebene des Scmutzbleches 2 orientiert, wodurch sich zwischen Halbsteg 3d und Schmutzblech 2 eine umlaufende Rille ausbildet, durch die Schmutz und Wasser abgeführt werden kann.

Bei der Ausführungsform gemäß Fig. 1 handelt es sich um eine Bremstrommel (1) mit einstückig angeformter Bremsscheibe 7, wobei die Bremsscheibe 7 zu dem Teil der Bremseinrichtung gehört, die als Betriebsbremse benutzt wird, während die Bremstrommel zu dem Teil der Bremseinrichtung gehört, der als Feststellbremse benutzt wird.

Der Erfindungsgedanke ist selbstverständlich nicht nur bei derartigen kombinierten Bremseinrichtungen anwendbar, sondern überall dort, wo ein Innenraum einer Bremseinrichtung mittels eines Schmutzbleches abgedeckt werden soll und wo man zwischen dem mit dem Rad umlaufenden Bauteil und dem nicht umlaufenden, fahrzeugseitigen Schmutzblech eine möglichst gute, berührungslose Abdichtung schaffen will.

## Patentansprüche

1. Bremseinrichtung für die Räder eines Kraftfahrzeuges mit einer radseitigen Bremstrommel (1) und einem fahrzeugseitigen Schmutzblech (2), das zur Ausbildung einer labyrinthartigen Dichtung mit einem umlaufenden Steg (3) in eine ringförmige Ausnehmung (4) in der dem Schmutzblech (2) gegenüberliegenden Stirnfläche (5) der Bremstrommel (1) berührungslos eingreift, **dadurch gekennzeichnet, daß** das Schmutzblech (2) durch Stanz- und Tiefziehvorgänge aus einem Blechabschnitt hergestellt ist und daß der durch spanloses Umformen einstückig mit dem Schmutzblech (2) ausgebildete umlaufende Steg (3) auf zumindest einem Teilumfang aus einer senkrecht zur Hauptebene des Schmutzbleches (2) vorstehenden Materialdopplung besteht, bei der ein radial innenliegender Halbsteg (3a) unmittelbar neben einem radial außenliegenden Halbsteg (3b) angeordnet ist.

2. Bremseinrichtung für die Räder eines Kraftfahrzeuges mit einer radseitigen Bremstrommel (1) und einem fahrzeugseitigen Schmutzblech (2), das zur Ausbildung einer labyrinthartigen Dichtung mit einem umlaufenden Steg (3) in eine ringförmige Ausnehmung (4) in der dem Schmutzblech (2) gegenüberliegenden Stirnfläche (5) der Bremstrommel (1) berührungslos eingreift, **dadurch gekennzeichnet, daß** das Schmutzblech (2) durch Stanz- und Tiefziehvorgänge aus einem Blechabschnitt hergestellt ist und daß der durch spanloses Umformen einstückig mit dem Schmutzblech (2) ausgebildete umlaufende Steg (3) auf zumindest einem Teilumfang einen radial innenliegenden Halbsteg (3c) sowie einen davon radial beabstandeten außenliegenden Halbsteg (3d) aufweist und daß sich beide Halbstege (3c, 3d) im wesentlichen senkrecht zur Hauptebene des Schmutzbleches (2) erstrecken und zwischen ihnen ein sich im wesentlichen in einer zur Hauptebene parallelen Ebene verlaufender Blechabschnitt (6) angeordnet ist.

3. Bremseinrichtung nach Anspruch 2, **dadurch gekennzeichnet, daß** der radial außenliegende Halbsteg (3d) sich im Querschnitt gesehen von der Hauptebene des Schmutzbleches (2) nach außen konisch erweiternd erstreckt und gerundet in die Hauptebene des Schmutzbleches (2) sowie in die dazu parallele Ebene des Blechabschnitts (6) übergeht.

4. Bremseinrichtung nach einem der Ansprüche 1 bis 3, **dadurch gekennzeichnet, daß** an der Bremstrommel (1) eine einstückig angeformte, sich radial nach außen erstrekkende Bremsscheibe (7) angeformt ist.

5. Bremseinrichtung nach Anspruch 4, **dadurch gekennzeichnet, daß** die ringförmige Ausnehmung (4) in der Bremstrommel (1) am radial innenliegenden Ende der Bremsscheibe (7) ausgebildet ist.

6. Bremseinrichtung nach Anspruch 5, **dadurch gekennzeichnet, daß** die Ausnehmung (4) im Querschnitt gesehen von einer zylindrischen Teilfläche (4a) und einer zur Hauptebene des Schmutzbleches (2) parallel verlaufenden Teilfläche (4b) begrenzt ist.

## Claims

1. Brake device for the wheels of an automotive vehicle which includes a wheel-sided brake drum (1) and a vehicle-sided mud guard (2) that engages in a non-contact manner with a circumferential web (3) into an annular recess (4) in the end surface (5) of the brake drum (1) opposite the mud guard (2) in order to provide a labyrinth-type seal,
**characterized in that** the mud guard (2) is made of sheet metal in punching and deepdrawing operations, and **in that** the circumferential web (3) which is integrally designed with the mud guard (2) by noncutting shaping on at least part of its circumference is comprised of a double layer of material which projects vertically in relation to the main plane of the mud guard (2) and is formed because a radially inward half web (3a) is arranged directly adjacent to a radially outward half web (3b).

2. Brake device for the wheels of an automotive vehicle which includes a wheel-sided brake drum (1) and a vehicle-sided mud guard (2) that engages in a non-contact manner with a circumferential web (3) into an annular recess (4) in the end surface (5) of the brake drum (1) opposite the mud guard (2) in order to provide a labyrinth-type seal,
**characterized in that** the mud guard (2) is made of sheet metal in punching and deepdrawing operations, and **in that** the circumferential web (3) which is integrally designed with the mud guard (2) by noncutting shaping on at least part of its circumference includes a radially inward half web (3c) and spaced therefrom a radially outward half web (3d), and **in that** both half webs (3c, 3d) extend substantially vertically to the main plane of the mud guard (2), and a sheet-metal portion (6) is interposed between them which generally extends in a plane that is in parallel to the main plane.

3. Brake device as claimed in claim 2,
**characterized in that** the radially outward half web (3d), viewed in a cross-section, extends in a conically outwardly expanding fashion from the main plane of the mud guard (2) and passes in a rounded fashion into the main plane of the mud guard (2) and into the parallel plane of the sheet-metal portion (6).

4. Brake device as claimed in any one of claims 1 to 3,
**characterized in that** a brake disc (7) is integrally shaped with the brake drum (1) and extends in a radially outward direction.

5. Brake device as claimed in claim 4,
**characterized in that** the annular recess (4) in the brake drum (1) is provided at the radially inward end of the brake disc (7).

6. Brake device as claimed in claim 5,
**characterized in that** the recess (4), viewed in a cross-section, is bounded by a cylindrical partial surface (4a) and a partial surface (4b) which extends in parallel to the main plane of the mud guard (2).

## Revendications

1. Dispositif de freinage pour les roues d'un véhicule automobile, comportant un tambour de frein (1) côté roue et un garde-boue (2) côté véhicule qui, pour réaliser une garniture d'étanchéité à labyrinthe, s'engage sans contact, par une languette (3) périphérique, dans un évidement (4) de forme annulaire dans la face frontale (5), opposée au garde-boue (2), du tambour de frein (1), **caractérisé en ce que** le garde-boue (2) est réalisé par des processus d'estampage et d'emboutissage profond, dans un tronçon de tôle, et **en ce que** la languette (3) périphérique, réalisée d'un seul tenant avec le garde-boue (2) par formage sans enlèvement de copeaux, est constituée, sur au moins une partie de la périphérie, d'un doublement de matière qui fait saillie perpendiculairement au plan principal du garde-boue (2) et pour lequel une demi-languette (3a) située radialement à l'intérieur est disposée immédiatement à côté d'une demi-languette (3b) située radialement à l'extérieur.

2. Dispositif de freinage pour les roues d'un véhicule automobile, comportant un tambour de frein (1) côté roue et un garde-boue (2) côté véhicule qui, pour réaliser une garniture d'étanchéité à labyrinthe, s'engage sans contact, par une languette (3) périphérique, dans un évidement (4) de forme annulaire dans la face frontale (5), opposée au garde-boue (2), du tambour de frein (1), **caractérisé en ce que** le garde-boue (2) est réalisé par des processus d'estampage et d'emboutissage profond, dans un morceau de tôle, et **en ce que** la languette (3) périphérique, réalisée d'un seul tenant avec le garde-boue (2) par formage sans enlèvement de copeaux, présente, sur au moins une partie de la périphérie, une demi-languette (3c) située radialement à l'intérieur ainsi qu'une demi-languette (3d) située radialement à l'extérieur à distance de la première, et **en ce que** les demi-languettes (3c, 3d) s'étendent sensiblement perpendiculairement au plan principal du garde-boue (2) et entre elles est disposé un tronçon de tôle (6) s'étendant sensiblement dans un plan parallèle au plan principal.

3. Dispositif de freinage selon la revendication 2, **caractérisé en ce que** la demi-languette (3d) située radialement à l'extérieur s'étend, vue en coupe transversale, depuis le plan principal du garde-boue (2) vers l'extérieur, en s'élargissant coniquement et se prolonge, arrondie, dans le plan principal du garde-boue (2) ainsi que dans le plan parallèle à celui-ci du tronçon de tôle (6).

4. Dispositif de freinage selon l'une des revendications 1 à 3, **caractérisé en ce que** sur le tambour de frein (1) est formé un disque de frein (7) formé d'un seul tenant et s'étendant radialement vers l'extérieur.

5. Dispositif de freinage selon la revendication 4, **caractérisé en ce que** l'évidement (4) de forme annulaire est réalisé dans le tambour de frein (1) à l'extrémité située radialement à l'intérieur du disque de frein (7).

6. Dispositif de freinage selon la revendication 5, **caractérisé en ce que** l'évidement (4), vu en coupe transversale, est délimité par une surface partielle (4a) cylindrique et une surface partielle (4d) s'étendant parallèlement au plan principal du garde-boue (2).
